# EUROPÄISCHE PATENTSCHRIFT

(11) **EP 2 542 357 B1**
(45) Veröffentlichungstag und Bekanntmachung des Hinweises auf die Patenterteilung: **14.04.2021**
(21) Anmeldenummer: 11718908.4
(22) Anmeldetag: 04.03.2011
(51) Int. Cl.: B08B 1/00, B08B 1/04

(54) **ROTORBLATTREINIGER UND VERWENDUNG DES ROTORBLATTREINIGERS**
ROTOR BLADE CLEANER AND USE OF THE ROTOR BLADE CLEANER
DISPOSITIF DE NETTOYAGE DE PALES DE ROTORS ET UTILISATION DUDIT DISPOSITIF DE NETTOYAGE

(30) Priorität: 05.03.2010 DE 102010010382
(43) Veröffentlichungstag der Anmeldung: 09.01.2013
(73) Patentinhaber: Hergenröder, Jörn, 56332 Oberfell (DE)
(72) Erfinder: Hergenröder, Jörn, 56332 Oberfell (DE)
(74) Vertreter: Pöhner, Wilfried Anton
(86) Internationale Anmeldenummer: PCT/DE2011/000232
(87) Internationale Veröffentlichungsnummer: WO 2011/107087

(56) Entgegenhaltungen:
- EP-A1- 1 517 033
- DE-A1- 10 330 426
- DE-A1-102008 019 680
- DE-U1-202004 001 091
- US-A1- 2009 297 352

## Beschreibung

Die Erfindung bezieht sich auf einen Rotorblattreiniger für ein Rotorblatt einer Windkraftanlage gemäß dem Oberbegriff des Anspruchs 1 sowie ein Verfahren zu dessen Verwendung.

Für an Land stehende Windkraftanlagen ist im Schnitt alle zwei Jahre eine Reinigung erforderlich, da durch angewehte und/oder vom Regen aufgebrachte Ablagerungen, die Reste erschlagener Insekten oder Vogelkot die Rauhigkeit der Oberfläche so stark zunimmt, dass von einem wesentlichen Absinken des Wirkungsgrades der Stromerzeugung berichtet worden ist.

Bei sog. "Off-Shore-Windkraftanlagen" auf offener See ist durch die Ablagerung von Salzkristallen auf den Rotorblättern die Reinigung mit einer noch höheren Frequenz erforderlich.

Außerdem müssen die Rotorblätter vorbeugend in regelmäßigen Abständen auf Risse und andere Beschädigungen überprüft werden, um Totalausfällen und deren dann immensen Folgeschäden vorzubeugen.

Eine seit langem bekannte Methode, solch hoch aufragende Objekte zu erreichen, ist das Abseilen des Servicepersonals von einem einfach erreichbaren, festen Punkt aus. Bei Windrädern ist es üblich, dass sich entsprechend geschultes Personal von der Gondel aus entlang eines senkrecht nach unten stehenden Rotorblattes abseilt und es dabei reinigt und inspiziert. Dieses Verfahren wird auch bergsteigerische Methode genannt.

Zwar sind die Investitionen für Seile und Haltegurt recht niedrig, aber die laufenden Personalkosten relativ hoch und das Gewicht der dabei einsetzbaren Werkzeuge prinzipbedingt recht niedrig.

Als Alternative stellt das Patent DE 197 26 408 eine Arbeitsbühne vor, die über Seile von der Gondel her entlang dem nach unten stehenden Rotorblatt nach oben bewegt werden kann. Zu Führung der Arbeitsbühne wird dabei der Mast der Windkraftanlage genutzt. Dieses Prinzip ist nur dann einsetzbar, wenn entsprechend kräftig dimensionierte Aufhängungspunkte an der Gondel vorhanden sind. Dann können jedoch im Gegensatz zum bergsteigerischen Verfahren auch Mitarbeiter eingesetzt werden, die nur für die jeweils erforderlichen Reinigungs- oder Inspektionsaufgaben geschult sein müssen.

Es bleibt jedoch als Nachteil dieser Methode, dass die erforderlichen Seile zuerst einmal gespannt werden müssen und auch dann der Zeitaufwand relativ hoch ist, da die Arbeitsbühne nur für manuelle Tätigkeiten ausgerüstet ist. Ein weiterer Nachteil sind die Kosten der Arbeitsbühne selbst, da so sie so groß sein muss, dass sie auch um den größten Querschnitt eines Rotorblattes herumreichen muss. Es wird ein praktisches Ausführungsbeispiel vorgestellt, dass zum Transport einen Lkw-Anhänger erfordert.

Das Patent DE 199 09 698 stellt eine Arbeitsbühne vor, die an einem vertikal nach unten stehenden Rotorblatt entlang geführt werden kann. Hier hat das arbeitende Personal dank der ganz geschlossenen Kabine eine temperierte und windfreie Arbeitsatmosphäre. Zum Anheben der Arbeitskabine wird ein Ausleger an einem Lastkraftwagen oder alternativ ein an den Mast des Turmes anlehnbares, teleskopierbares Schienensystem vorgestellt.

Beide Einrichtungen sind relativ sehr teuer. Ein weiterer Nachteil ist, dass sie während der gesamten Arbeiten an der Windkraftanlage verbleiben müssen und nicht für andere Einsätze verfügbar sind. Zusätzlich zu den Abschreibungen für diese relativ aufwändige Investition müssen noch die Lohnkosten für das tätige Personal aufgebracht werden.

Als eine kostengünstigere Alternative beschreibt das Patent DE 103 32 876 deshalb einen "Schaber", der mannlos an der Vorderkante eines Rotorblattes entlanggeführt wird und dabei die dort haftenden groben Verschmutzungen mechanisch abschabt.

Gegenüber den zuvor beschriebenen Lösungen sind hier keine laufenden Personalkosten erforderlich. Der Schaber selbst ist deutlich kleiner und deshalb auch kostengünstiger.

Die Methode weist jedoch zahlreiche andere Nachteile auf: So sind zur Führung des Schabers auf dem Rotorblatt Führungselemente unabdingbar erforderlich. Die Erfindung schlägt zwei Seile vor, die auf beiden Seiten des Rotorblattes gespannt werden. Je weiter der Schaber von den Spannpunkten eines solchen Seiles entfernt ist, desto geringer wird die Kraft, mit der er auf die Flügelvorderkante schabend einwirken kann. Wenn die Seilspannung aus diesem Grunde so hoch gewählt wird, dass auch in der Mitte zwischen den beiden Aufhängungspunkten des Seiles noch eine ausreichend hohe Normalkraft auf den Schaber wirkt, dann steigt diese Normalkraft in der Nähe der Befestigungspunkte des Seiles so stark an, dass der Schaber nicht nur die Verunreinigungen abtragen wird, sondern auch noch die Beschichtung des Rotors beschädigt und im Extremfall Schleifspuren auf der aerodynamisch so wichtigen Blattvorderkante des Rotors hinterlässt.

Nachteilig ist auch die vorgesehene Antriebsart zur Bewegung des Schabers. Es wird empfohlen ihn von der Schwerkraft bei jeder Umdrehung des Rotorblattes hin und her bewegen zu lassen. Alternativ sind Leitflächen am Schaber vorgesehen, die von der Luftströmung her eine Kraft in Längsrichtung des Rotorblattes auf den Schaber ausüben sollen und ihn damit bewegen. Auch diese Antriebsart kann eine kaum kontrollierbare und daher zu schnelle Bewegung hervorrufen, die die Oberfläche des Rotorblattes vorschnell verschleißen.

Problematisch ist auch, dass in einem Luftstrom, der parallel zu der Rotoraußenfläche verläuft, die beiden Seile an den Flanken des Rotors in Schwingungen geraten. Die Amplitude dieser Schwingungen kann so groß werden, dass das Seil mit seiner eigenresonanten Frequenz reversierend auf die Flanke des Rotorblattes aufschlägt.

Dieser Effekt mit seinem dabei entstehenden typischen Geräusch ist von Fahnenmasten bekannt, an denen ein Seil zum Emporziehen der Fahne verläuft. Nachteilig daran ist aber nicht nur das Geräusch, sondern die durch das dauerhaft aufschlagende Seil hervorgerufene Beschädigung der Oberfläche, die den Wirkungsgrad des Rotors damit verschlechtert.

Die DE 10 2008 019 680 zeigt eine Rahmenkonstruktion, die um die Rotorblätter herum geschlossen und an Seilen anheb- und absenkbar ist. Die Verwendung von Seilen setzt physikalisch voraus, dass das Rotorblatt im Wesentlichen vertikal ausgerichtet bleiben muss, nachdem die Seile kräftemäßig nur in eine Richtung wirken können und die Schwerkraft zur Bewegung in die Gegenrichtung unabdingbar ist. Da der Träger nicht von U-Form ist, findet sich keine Offenbarung dahingehend, wie eine U-Form dem Rotorblatt zuzuordnen ist. Die EP 1 517 033 offenbart eine Reinigungsvorrichtung für Windturbinenblätter, die aus zwei im Wesentlichen parallel zueinander ausgerichteten rotierenden Bürstenzylindern besteht, die sowohl im Stellwinkel als auch in ihren relativen Abständen zueinander veränderbar und die an einer Hebevorrichtung befestigt sind. Hieraus ist nicht entnehmbar, dass bei waagerechter Ausrichtung des Rotorblatts der Träger von oben her aufgesteckt wird.

Eine Reinigungsvorrichtung zeigt auch die US 2009/297352, die mit Hilfe eines Abstreifers arbeitet, der in axialer Richtung entlang des Rotorblattes bewegt wird, wobei die Bewegung nach außen mit Hilfe der durch die Rotation des Rotorblattes erzeugte Zentrifugalkraft erfolgt und durch geeignete technische Maßnahmen nach innen zu, d.h. zurück zum Drehpunkt bewegt wird. Es versteht sich von selbst, dass der Abstreifer überall dort, wo es einer Reinigung bedarf und somit allseitig zu positionieren ist.

Einen durch eine Kombination aerodynamischer und durch Seilzüge ausgeübter Kräfte entlang der Blattvorderkante vor- und zurückbewegten flexiblen Schaber als Reinigungsgerät schlägt die EP 1 500 815 A1 vor Das Dokument EP 1 500 815 A1 offenbart einen Rotorblattreiniger gemäß dem Oberbegriff des Anspruchs 1, sowie eine Verwendung dieses Rotorblattreinigers.

Auf diesem Hintergrund hat sich die Erfindung die Aufgabe gestellt eine Reinigungsvorrichtung zur Instandhaltung von Rotorblättern an Windkraftanlagen bereitzustellen, welcher auf keinerlei bestimmte Einrichtung des Windrades zurückgreifen muss.

Als Lösung lehrt die Erfindung eine Vorrichtung mit den im Anspruch 1 angegebenen Merkmalen, sowie eine Verwendung mit den in Anspruch 27 angegebenen Merkmalen.

Ein wesentliches Merkmal des erfindungsgemäßen Rotorblattreinigers ist also der U-förmige Träger für die Reinigungsgeräte. Da der Träger zwischen seinen beiden Schenkeln eine schlitzartige Öffnung bildet, kann er einfach und schnell auf die Blattvorderkante eines Rotorblattes aufgesetzt werden. Wenn das Rotorblatt horizontal steht, kann der Träger als "Reiter" von oben her aufgesetzt werden und kann ohne eine weitere Führungseinrichtung auf dem Blattvorderkante hin- und herfahren.

Da zu beiden Seiten des Trägermittelstückes je ein Schenkel angeordnet ist, der nach unten verläuft, nimmt die Anordnung eine stabile Position ein, in der sie auch ohne Unterstützung von Außen verbleibt. Aus dieser Position wird sie auch von den Gegenkräften bei der Reinigung sowie von Windböen bis zu einer gewissen Stärke nicht herausgedrückt, da sich die Wascheinrichtungen beider Schenkel auf den Rotoroberflächen abstützen können.

Zusätzlich kann die Stabilität des auf der Blattvorderkante "reitenden" Trägers dadurch unterstützt werden, dass an den nach unten weisenden, freien Enden der Schenkel Hilfseinrichtungen oder Gewichte angebracht sind, so dass sich der Schwerpunkt des Trägers und aller seiner Anbauten unterhalb der Blattvorderkante befindet.

In der Praxis werden meist keine zusätzlichen Gewichte erforderlich sein, da die Wickel von flexiblen Leitungen, Versorgungstanks, Steuerungen oder die Verstelleinrichtungen für die Andrückung der Reinigungsgeräte sowieso untergebracht werden müssen.

In der Praxis werden meist keine zusätzlichen Gewichte erforderlich sein, da die Wickel von flexiblen Leitungen, Versorgungstanks, Steuerungen oder die Verstelleinrichtungen für die Andrückung der Reinigungsgeräte sowieso untergebracht werden müssen.

Wenn der U-förmige Träger auf dem Rotorblatt "reiten" soll, setzt das voraus, dass das zu reinigende Rotorblatt in seiner Längsachse etwa waagerecht ausgerichtet ist. Das Profil des Rotorblattes muss in eine etwa senkrechte Stellung verschwenkt werden. In dieser Stellung wird das Windrad bei Sturm "aus dem Wind heraus" genommen, um der Luftströmung die geringste Angriffsfläche zu bieten. Deshalb ist diese Funktion grundsätzlich bei jedem großen Windrad vorhanden.

In einer alternativen Ausführungsform kann der U-förmige Träger auch auf ein schräg oder vertikal stehendes Rotorblatt aufgesetzt werden. Bei einem vertikal nach unten stehenden Rotorblatt kann der U-förmige Träger z.B. an Seilen von der Gondel des Generators aus nach oben gezogen werden, währenddessen die Reinigungsgeräte die Oberfläche säubern.

Bei allen Varianten ist an beiden gegenüberliegenden Schenkeln wenigstens je ein Reinigungsgerät angeordnet. Da beide Reinigungsgeräte zumindest sehr nahe an die Oberfläche des Rotorblattes herangebracht werden, können sie den Träger bei Belastungen auch zusätzlich abstützen. Das ist z.B. bei rotierenden Bürsten, Schaumstoffzylindern oder ähnlichen Reinigungsgeräten problemlos möglich und ergibt sich aus deren Funktion.

Für andere Reinigungsgeräte wie z.B. Ultraschallköpfe und Laserstrahlquellen kann eine Berührung mit der Oberfläche des Rotorblattes unerwünscht sein. In diesem Fall ist es sinnvoll, am unteren Ende kein aus auch die Blattvorderkante eines Rotorblattes. Falls jedoch der Abstand der Schenkel so groß und/oder der Arbeitsbereich der Reinigungsgeräte relativ klein ist, kann auch am Trägermittelstück noch ein weiteres Reinigungsgerät angeordnet werden, das auf die Reinigung der Blattvorderkante abgestimmt ist.

Erfindungsgemäß besteht der Rotorblattreiniger aus zwei Baugruppen . Die eine Baugruppe ist der U-förmige Träger mit den Reinigungsgeräten. Die andere Baugruppe ist eine Versorgungseinheit, die den Träger und die darauf angeordneten Reinigungsgeräte mit Energie, wie z.B. elektrischem Strom oder Druckluft und/oder Reinigungsmittel versorgt. Auch die Versorgungseinheit ist auf die Blattvorderkante aufsetzbar. Die Versorgungseinheit ist ebenfalls U-förmig, damit sie auf dem senkrecht stehenden Profil eines waagerecht ausgerichteten Rotorblattes einen sicheren Halt findet. Von der Versorgungseinheit führen flexible Leitungen zu dem verfahrbaren Träger.

Im einfachsten Fall ist die Versorgungseinheit auf dem Rotorblatt nicht verfahrbar sondern verbleibt an der Stelle, an der sie aufgesetzt worden ist.

Für das Aufsetzen mit einem Hubschrauber kann es jedoch von Vorteil sein, wenn die Versorgungseinheit ebenso wie der Träger auf dem Rotorblatt verfahrbar ist, denn dann kann sie an beliebiger Stelle aufgesetzt werden und bis in die Nähe der Wurzel des Rotorblattes verfahren werden und dort während des Reinigungsvorganges verbleiben.

Da der Bereich des Rotorblattes in der Nähe seiner Wurzel für die Erzeugung eines Drehmomentes sowieso fast keinen nennenswertes verfahren werden und dort während des Reinigungsvorganges verbleiben.

Da der Bereich des Rotorblattes in der Nähe seiner Wurzel für die Erzeugung eines Drehmomentes sowieso fast keinen nennenswerten Beitrag liefert, ist es nicht von Belang, wenn unterhalb der Versorgungseinheit keine Reinigung des Rotorblattes erfolgt. Da die Versorgungseinheit insbesondere für einen mannlosen Betrieb des Rotorblattreinigers gedacht ist, sollte die Bewegung vom Aufsetzpunkt auf dem Rotorblatt bis zur Wurzel des Rotorblattes aus der Ferne, z.B. aus dem absetzenden Hubschrauber oder dem absetzenden Kran an der Gondel her steuerbar sein.

Dadurch wird erreicht, dass der Träger mit den darauf montierten Reinigungsgeräten relativ leicht ist und deshalb ohne Überlastung des Rotorblattes bis an dessen Spitze verfahren werden kann.

Wenn das Gewicht des Trägers jedoch sehr gering ist, dann kann er von der Zugkraft den Leitungen zur Versorgungseinheit verkippt werden. Um das zu vermeiden, schlägt die Erfindung in einer alternativen Ausführung vor, dass die Leitungen zwischen Versorgungseinheit und dem verfahrbaren Träger an wenigstens einem U-förmigen Zwischenträger angehängt sind, der zwischen dem Träger und der Versorgungseinheit auf der Blattvorderkante verfahrbar ist. Dieser Zwischenträger hat ebenfalls zwei Schenkel und an dem Schenkelmittelstück wenigstens ein Laufrad oder ein Gleitstück, mit dem er auf der Blattvorderkante bewegt werden kann. Jeder dieser Zwischenträger reduziert das "Durchhängen" der Leitungen und vermindert damit das Risiko einer Kippbewegung des Trägers und/oder der Versorgungseinheit.

Für den Transport ist es jedoch wünschenswert, nur eine einzige kompakte Einheit zu hantieren. Deshalb wird vorgeschlagen, dass der Träger mitsamt den Zwischenträgern und der Versorgungseinheit zu einer Transporteinheit verkuppelt werden kann. Diese Einheit sollte eine zentrale Aufnahmevorrichtung, wie z.B. eine Tragöse haben, mit der sie von einem Hubschrauber oder von einem Kran an der Gondel der Windkraftanlage oder durch einen Kran vom Boden aus aufgenommen und auf ein anderes Rotorblatt oder in einen Transporter versetzt werden kann.

Für die Ausführung der Reinigungsgeräte sind zahlreiche Alternativen bekannt. Sinnvoll sind rotierende Bürsten, Rollen oder Walzen und/oder Hockdruckreiniger oder andere Sprüheinrichtungen für Reinigungsflüssigkeit und/oder Ultraschallquellen, die anhaftende Verunreinigungen durch hochfrequente Schwingungen mit marginaler Amplitude lösen. Eine andere Alternaive ist Trockeneis, das durch feine Düsen ausgestoßen und auf die Oberfläche katapultiert wird. Dort löst es Verunreinigungen durch seine kinetische Energie und löst sich anschließend in der Atmosphäre auf. Bekannt sind auch Laserstrahlen als Reinigungsgerät.

In einer einfachen Ausführungsform sind die Schenkel des U-förmigen Trägers fest mit dem Trägermittelstück verbunden. Zur Anpassung an das über die Länge des Rotorblattes hinweg sich ändernde Profil müssen die Reinigungsgeräte beweglich an den Schenkeln befestigt werden, z.B. durch gelenkig an den Schenkeln befestigte Schleppstangen, die zum Betrieb an die Oberfläche des Rotorblattes andrückbar sind, z.B. mittels Pneumatikzylindern.

In einer anderen Alternative bestehen die Schenkel aus mehreren, gelenkig miteinander verbundenen Schenkelgliedern. An jedem Schenkelglied ist ein Reinigungsgerät befestig. Die Schenkelglieder sind gegeneinander parallel zur Längsachse des Rotorblattes verschwenkbar. Das erste Schenkelglied ist gegenüber dem Trägermittelstück des Trägers auf die Rotoroberfläche drückbar. Jedes weitere Schenkelglied kann von seinem benachbarten Schenkelglied aus auf die Rotoroberfläche gedrückt werden. An jedem Schenkelglied ist ein Reinigungsgerät befestigt.

Der wesentliche Vorteil dieser Anordnung ist, dass die aneinandergereihten Schenkelglieder sich als Polygon der jeweiligen Form des Profils vom Rotorblatt annähern. Das ist insbesondere in der Nähe der Wurzel des Rotorblattes wesentlich, weil dort das Profil des Rotorblattes konkave Formen hat.

Zum Andrücken der Schenkelglieder können Federn oder Pneumatikzylinder verwendet werden. Die letzteren haben den Vorteil, dass beim Aufsetzen des Trägers alle Zylinder in ihre Ruheposition zurückgefahren werden können, woraufhin sich die beiden Schenkel auseinander spreizen und in dieser Konfiguration noch leichter auf das Profil des Rotorblattes aufsetzbar sind.

Da alle Schenkelglieder kettenartig aneinandergereiht sind, muss die Anpresskraft für das erste Schenkelglied am größten dimensioniert werden, da sich über den relativ langen Hebelarm des gesamten Schenkels hinweg dessen gesamte Druckkräfte auf das oberste Schenkelglied auswirken.

Zur Stabilität des Trägers ist es wünschenswert, dass sich das Trägermittelstück zwischen den beiden Schenkeln stets in einer horizontalen Position befindet. Im Prinzip sorgen dafür in erster Näherung schon die beiden seitlichen Schenkel mit den darauf angeordneten Reinigungsgeräten. Falls jedoch das Rotorblatt sehr stark verschränkt ist, wenn also das Profil des Rotorblattes über seine Länge hinweg in sich verdreht ist, dann gibt es Bereiche, in denen der U-förmige Träger von Prinzip her "schief" stehen würde. Das kann entweder durch eine geringfügige Verschwenkung des Rotorblattes um seine Längsachse ausgeglichen werden, was jedoch ein Zusammenwirken mit dessen Antrieb erfordert. Eine Alternative ist es, die Schwenkachse zwischen dem Trägermittelstück und den beiden daran anschließenden Schenkelgliedern jeweils auf einen solchen Winkel einzustellen, dass das Trägermittelstück stets in einer horizontalen Position verbleibt.

In einer vorteilhaften Ausführungsvariante sind an der Unterseite des Trägermittelstückes und/oder des Mittelstückes der Versorgungseinheit wenigstens zwei Rollen oder Räder angebracht, auf denen der Träger und/oder die Versorgungseinheit verfahrbar sind. Diese beiden Räder sollten in Richtung der Längsachse des Rotorblattes gesehen zueinander beabstandet sein. Je größer dieser Abstand ist, desto geringer ist das Risiko des Verkippens vom Träger oder von der Versorgungseinheit.

Die Laufflächen dieser Räder sollten im Querschnitt konkav geformt sein, damit sie auf der Blattvorderkante abrollen können und sich dort durch ihre seitlichen Wülste auch bei Erschütterungen gut halten können. Wenigstens eines dieser Räder sollte bei einem halbautomatischen oder vollautomatischen Rotorblattreiniger durch einen Antrieb drehbar sein, der dadurch für seine Bewegung sorgt.

Auf aktuellem Stand der Technik sind verschiedene Inspektionsgeräte bekannt, mit denen Risse und andere Beschädigungen des Rotors vorbeugend geprüft werden können. Geeignete Inspektionsgeräte arbeiten entweder mit akustischen Signalen, wie z.B. einer Ultraschallquelle und können an dem reflektierten Schall erkennen, ob sich an der Oberfläche des überprüften Teiles bereits eine erste Inhomogenität in ihrem Oberflächenmaterial ankündigt. Eine andere Prüfmethode ist die Aufnahme der Außenfläche mit Kameras und die visuelle Überprüfung der aufgenommenen Bilder an einem anderen Ort.

Zusätzlich oder alternativ können an dem Träger auch Geräte zum Abtragen von alten Beschichtungen wie z.B. Sandstrahler und/oder Geräte zum Auftragen von neuen Beschichtungen wie z.B. Farbsprühlanzen angebracht werden. Damit sind das Abtragen alter, mürber Lackschichten und das Aufspritzen einer neuen möglich.

Bei besonders großen und langwierig zu reinigenden Windrädern kann es sinnvoll sein, an die Versorgungseinheit und/oder an den Träger eine Arbeitsplattform für eine Bedienperson anzubauen, von wo aus der Reinigungsvorgang gesteuert und überwacht werden kann. Die Bedienperson kann von dem Hubschrauber oder dem Kran, der schon den Träger und die Versorgungseinheit heraufgebracht hat, dorthin gebracht werden.

Wenn die Bedienperson von dort aus Zugriff auf die Versorgungseinheit hat, ist es sinnvoll, an der Versorgungseinheit auch Bedientassen für die Steuerung des Reinigungsvorganges anzuordnen. Alternativ oder zusätzlich kann der Ablauf des Reinigungsvorganges jedoch auch über eine drahtlose Fernbedienungseinheit gesteuert werden. Diese Fernbedienungseinheit kann nicht nur von einer Bedienperson auf der Arbeitsplattform oder in der Gondel des Windrades betätigt werden sondern auch von einer Person in einem Hubschrauber oder am Boden bedient werden.

Bei einer Off-shore-Aufstellung des Windrades könnte die Fernbedienung auch von einem Boot aus erfolgen. Eine weitere, denkbare Alternative ist die Bedienung von einer geographisch weit entfernten Bedienungszentrale. Dazu muss sich die Bedienzentrale sinnvoller Weise auch über die tatsächlich ablaufenden Bewegungen informieren können, z.B. über eine Videokamera.

Die Erfindung bevorzugt jedoch eine vollautomatische und mannlose Arbeitsweise des Rotorblattreinigers.

Für zahlreiche Reinigungsverfahren, wie z.B. eine rotierende Waschbürste, sind Reinigungsflüssigkeiten höchst wirkungsvoll. Wenn darin Substanzen zur Wirkungsverstärkung enthalten sind, so können diese nicht in jedem Fall in der Umgebung des Windrades entsorgt werden. Dann können unterhalb eines jeden Schenkels Auffangbehälter für die Reinigungsflüssigkeit angeordnet werden. Von dort aus kann sie in einen Sammelbehälter oder in eine Wiederaufbereitungsanlage gepumpt werden.

Auf aktuellem Stand der Technik sind zur Steuerung von selbsttätigen Systemen wie dem Rotorblattreiniger elektronische Steuerungen verfügbar, die mit hoher Zuverlässigkeit und zu relativ geringem Preis die sämtlichen Funktionen sicherstellen. Dazu sind verschiedene Sensoren erforderlich, die in der Steuerung ausgewertet werden und deren Informationen zu Ansteuerungssignalen für die damit verknüpften Aktoren verwendet werden. Geeignete Sensoren sind sinnvoll für die Erfassung des Endes vom Rotorblatt in Richtung seiner Längsachse, um zu verhindern, dass der Träger über das Ende des Rotors hinaus verfährt und abstürzt.

Sensoren zur Erfassung der Hinterkante des Profils vom Rotorblatt sorgen gegen Ende des Rotorblattes bei dem dann schlanker und schmäler werdenden Profil dann dafür, dass nicht benötigte Reinigungsgeräte deaktiviert werden.

Sensoren, die den Abstand des Reinigungsgerätes von der Rotoroberfläche erfassen, sorgen für den richtigen Abstand des Reinigungsgerätes. Sensoren, die die Richtung und die Stärke einer eventuellen Luftströmung erfassen, können zu einer Korrektur, z.B. der Reinigungseinrichtung, verwendet werden. Wenn z.B. ein Reinigungsmittel versprüht wird, dass durch die Luftströmung an einen anderen Ort abgelenkt wird, so kann dessen Verschiebung durch die Luftströmung gemäß den Informationen des Windsensors korrigiert werden.

Sensoren können die jeweilige Verschmutzung messen und daraufhin die Reinigungsgeräte entsprechend ansteuern. Eine weitere Anwendung für Sensoren ist die Erfassung der Abweichung des Trägermittelstückes von der Horizontalen. Die Sensoren messen, wie "schief" das Trägermittelstück steht, sodass die Steuerung für die Korrektur über eine entsprechende Winkelstellung der obersten Schenkelglieder sorge tragen kann.

Sensoren können Markierungen auf der Rotoroberfläche erfassen und so z.B. rechtzeitig vor dem Ende des Rotors das Reinigungsgerät zum Stehen bringen und wieder zurück zur Wurzel des Rotorblattes schicken.

In einer interessanten Variante des erfindungsgemäßen Rotorblattreinigers ist er ein vollauf autarkes Gerät, das auf ein beliebiges, horizontal stehendes Rotorblatt mit senkrecht ausgerichtetem Profil aufgesetzt werden kann und dort selbsttätig seine Reinigungsarbeit durchführen kann. Dazu sind etliche Hilfseinrichtungen sinnvoll. Die Erfindung schlägt vor, dass ein Verbrennungsmotor und/oder eine Batterie und/oder ein Generator und/oder ein Kompressor für Pneumatik und/oder ein Druckerzeuger für Hydrauliksysteme und/oder eine Hochdruckpumpe für Reinigungsflüssigkeiten und/oder ein Behälter für Reinigungsflüssigkeiten und/oder ein Vorratsbehälter für Trockeneis und/oder eine elektronische Steuerung und/oder eine Telemetrieeinrichtung zur Datenübermittlung entweder auf dem Träger und/oder auf der Versorgungseinheit vorhanden sein können. Mit dem Verbrennungsmotor kann z.B. Strom erzeugt werden, über den der Fahrantrieb des Trägers betreiben wird. Die Batterie dient zum Wiederanlassen des Verbrennungsmotors. Ein Kompressor für Pneumatik erzeugt den erforderlichen Luftdruck für die Zylinder, mit denen die Schenkelglieder an die Rotoroberfläche angedrückt werden.

Falls Hydrauliksysteme gewählt werden, ist dafür ein Druckerzeuger erforderlich. Der Verbrennungsmotor kann auch die Hochdruckpumpe für die Reinigungsflüssigkeiten antreiben. Für Reinigungsmethoden, die Reinigungsflüssigkeiten erfordern muss ein entsprechender Behälter vorhanden sein. Falls mit Trockeneis gereinigt wird, so ist auch dafür ein Vorratsbehälter nötig. Zur Kontrolle eines ordnungsgemäßen Ablaufes des Reinigungsprozesses kann die Übermittlung von verschiedenen Daten an eine Bodenstation oder einen externen Speicher erforderlich sein. Diese Aufgabe kann eine Telemetrieeinrichtung übernehmen.

In einer alternativen Ausführungsform kann ein Rotorblattreiniger jedoch auch seine Energie und/oder die Reinigungsflüssigkeit aus der Gondel der Windkraftanlage her erhalten. Zusätzlich kann belastete Reinigungsflüssigkeit zur Gondel zurückgeführt werden. Diese Konfiguration ist bei Neubauten von Windrädern interessant.

Wenn das Windrad solitär steht, dann ist es , nichterfindungsgemäß , sinnvoll, das Reinigungsgerät exklusiv nur für dieses Windrad einzusetzen. Dann kann es sogar wirtschaftlich sein, wenn einfache aber gewichtige Versorgungseinrichtungen in der Gondel eingebaut werden und nur ein Träger auf den zu reinigenden Rotorblättern hin und her fährt und dabei von der Gondel aus versorgt wird.

Ein typischer Reinigungsprozess mit einem Rotorblattreiniger ohne separate Versorgungseinheit besteht aus den folgenden Schritten: Im ersten Schritt wird das zu reinigende Rotorblatt einer Windkraftanlage in eine waagerechte Stellung in Bezug auf seine Längsachse verfahren. Das Profil des Rotorblattes muss in eine etwa senkrechte Stellung verschwenkt werden.

Dann wird im zweiten Schritt der Rotorblattreiniger auf die Blattvorderkante aufgesetzt und von dem Gerät gelöst, mit dem er aufgesetzt worden ist. Ein Hubschrauber klinkt sein Tragseil aus und ein Kran entkoppelt den Haken.

Im dritten Schritt wird der Rotorblattreiniger möglichst nahe an die Wurzel des Rotorblattes herangefahren. Das ist insbesondere dann interessant, wenn das Reinigungsgerät von einem Hubschrauber aufgesetzt worden ist von dem aus keine ganz exakte Positionierung möglich ist.

Im vierten Schritt verfährt der Rotorblattreiniger entlang der Blattvorderkante bis zum äußersten Ende des Rotorblattes und reinigt dabei die Rotoroberfläche.

Im fünften Schritt fährt er wieder zurück zur Wurzel des Rotorblattes. Im sechsten Schritt wird von dem Rotorblatt abgehoben. Die Reinigung weiterer Rotorblätter läuft dann wiederum gemäß den Schritten eins bis sechs ab.

Der Ablauf gestaltet sich dann etwas anders, wenn der Rotorblattreiniger aus einer Versorgungseinheit und einem davon getrennten Träger besteht. Dann verfährt im vierten und im fünften Schritt des Reinigungsprozesses nur der Träger bis zum Ende des Rotorblattes und kehrt von dort wieder zur Versorgungseinheit zurück. Die Versorgungseinheit bleibt in der Nähe der Wurzel des Rotorblattes. Im fünften Schritt wird dann zusätzlich der Träger mit der Versorgungseinheit zu einer Transporteinheit verkuppelt, die im sechsten Schritt dann in einem einzigen Zug abgehoben wird.

Im zweiten Schritt kann - wie bereits zahlreich erwähnt - der Rotorblattreiniger entweder von einem Hubschrauber oder von einem Kran an der Gondel der Windkraftanlage oder von einem Kran am Boden auf die Blattvorderkante aufgesetzt werden.

Im vierten Schritt kann die Reinigungsflüssigkeit, die im Auffangbehälter gesammelt worden ist, aufbereitet und sofort wieder zur Reinigung eingesetzt werden.

In einer spektakulären Ausführungsvariante wird anstelle eines Kranes auf der Gondel der Rotor der Windkraftanlage zum Anheben des am Boden stehenden Rotorblattreinigers benutzt. Dazu muss in jedes Rotorblatt ein Hubseil eingebaut werden, das an einer Stelle des Rotorblattes aus diesem heraustritt, z.B. an seiner Hinterkante. Dann kann im zweiten Schritt aus einem waagerecht stehenden Rotorblatt der Windkraftanlage ein Hubseil herabgelassen werden.

Damit wird ein auf dem Boden stehender Rotorblattreiniger soweit angehoben, bis er in die Nähe dieses Rotorblattes gelangt ist. Im nächsten Schritt wird der gesamte Rotor der Windkraftanlage so weit verschwenkt bis das nächste Rotorblatt der Windkraftanlage von unten her in die Öffnung zwischen den Schenkeln des Trägers einschwenkt bis es das Mittelstück des Trägers berührt.

Während des weiteren Verschwenkens des Rotors bis zur waagerechten Stellung des Rotorblattes, das den Träger bereits berührt, muss entsprechend dem Verschwenkungswinkel das Hubseil aus dem höher stehenden Rotorblatt solange wieder herausgelassen werden, bis der Rotorblattreiniger sicher auf den nunmehr waagerecht stehenden Rotorblatt ruht.

Dann kann der Reinigungsprozess beginnen. Entsprechend dem Verfahrweg muss das Hubseil weiter gelockert werden. Nach dem Abschluss der Reinigung wird der Rotorblattreiniger wieder vom benachbarten, als Kran wirkenden Rotorblatt abgehoben und auf dem Boden abgestellt. Dann wird das soeben benutzte Hubseil in das Rotorblatt zurückgezogen und das nächste Rotorblatt soweit verschwenkt, bis sich dessen Hubseil oberhalb des Rotorblattreinigers befindet. Dann kann der nächste Schritt starten

Im Folgenden sollen weitere Einzelheiten und Merkmale der Erfindung anhand eines Beispiels näher erläutert werden. Dieses soll die Erfindung jedoch nicht einschränken, sondern nur erläutern. Es zeigt in schematischer Darstellung:
- Figur 1: Rotorblatt und Träger mit Reinigungsgeräten und getrennter Versorgungseinheit
- Figur 2: Hubschrauber beim Absetzen eines Reinigungsgerätes auf ein Windrad

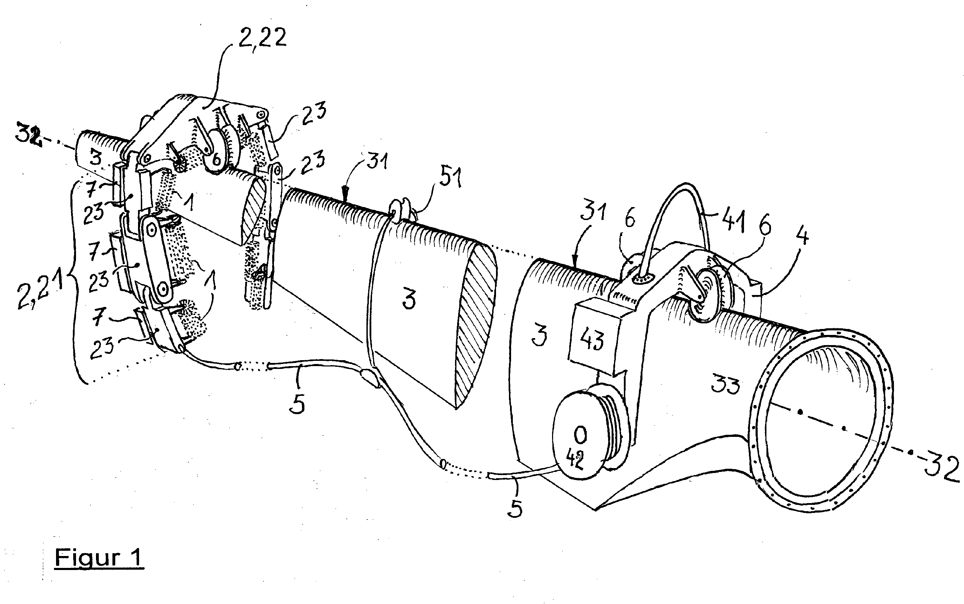

Die **Figur 1** zeigt in perspektivischer Darstellung ein Rotorblatt 3 eines Rotors von einer Windkraftanlage. Zeichnerisch sind aus diesem Rotorblatt 3 drei Teilstücke ausgeschnitten und entlang ihrer Längsachse 32 angeordnet. In Figur 1 wird eine Variante des Rotorblattreinigers dargestellt, die für das Aufsetzen auf ein horizontal ausgerichtetes Rotorblatt mit einem senkrecht ausgerichteten Profil ausgelegt ist.

An der rechten Bildkante ist das kreisförmige Verbindungsstück des Rotorblattes 3 zur Nabe des Rotors zu erkennen. Dieses kreisförmige Verbindungsstück ist an die Wurzel 33 des Rotorblattes angesetzt. In der Nähe der Wurzel 33 weist das Profil des Rotorblattes 3 seine größten Abmessungen auf und wird von da aus bis zur Spitze des Rotorblattes immer kleiner.
In Figur 1 ist sehr gut zu erkennen, dass die Blattvorderkante 31 des Rotorblattes 3 eine wulstartige Fläche bildet, auf der der Träger 2 und die Versorgungseinheit 4 mit je einem Paar Räder 6 bewegt werden kann.

Die in Figur 1 gezeigte Ausführungsvariante des Trägers 2 besteht aus einem Trägermittelstück 22, an dem die beiden Räder 6 befestigt sind. In der hier gezeigten Ausführungsform weisen die Räder ein konkaves Profil auf, das an das Profil der Blattvorderkante 31 angepasst ist, wodurch sie einen sicheren Halt finden. Durch die paarweise und hintereinander stehende Anordnung der Räder 6 wird sichergestellt, dass der Träger 2 auch während seiner Reinigungsarbeit gegenüber der Längsachse 32 des Rotorblattes 3 nicht "ins Kippen" gerät.

Zu beiden Seiten des Trägermittelstückes 22 schließen sich die Schenkel 21 des Trägers 2 an. In der hier gezeigten Ausführungsvariante besteht jeder Schenkel 21 aus drei Schenkelgliedern 23, die gelenkig miteinander verbunden sind. Die Schwenkachse dieser Gelenke verläuft parallel zur Längsachse 32 des Rotorblattes 3. Damit können sich die Schenkelglieder 23 an das über seine Länge hinweg wechselnde Profil des Rotorblattes 3 anpassen.

In Figur 1 ist sehr gut zu sehen, dass auf der Innenseite eines jeden Schenkelgliedes 23 und auf der Unterseite des Trägermittelstückes 22 je ein Reinigungsgerät 1 angeordnet ist. Im gezeigten Ausführungsbeispiel ist es eine rotierende Bürste. Die Enden der einzelnen Haare dieser Bürste sind in Figur 1 als Punkt markiert.

In Figur 1 ist eine Position der Schenkelglieder 23 dargestellt, die für das Abheben des Trägers 2 nach oben hin geeignet ist. in dieser Position "öffnet" sich der Träger 2 mit seinen beiden Schenkeln 23, sodass die darauf befestigten Reinigungsgeräte 1 nicht an der Oberfläche des Rotorblattes 3 anliegen. Dadurch kann der Träger 2 samt seinen Anbauten sehr leicht nach oben hin abgezogen werden.

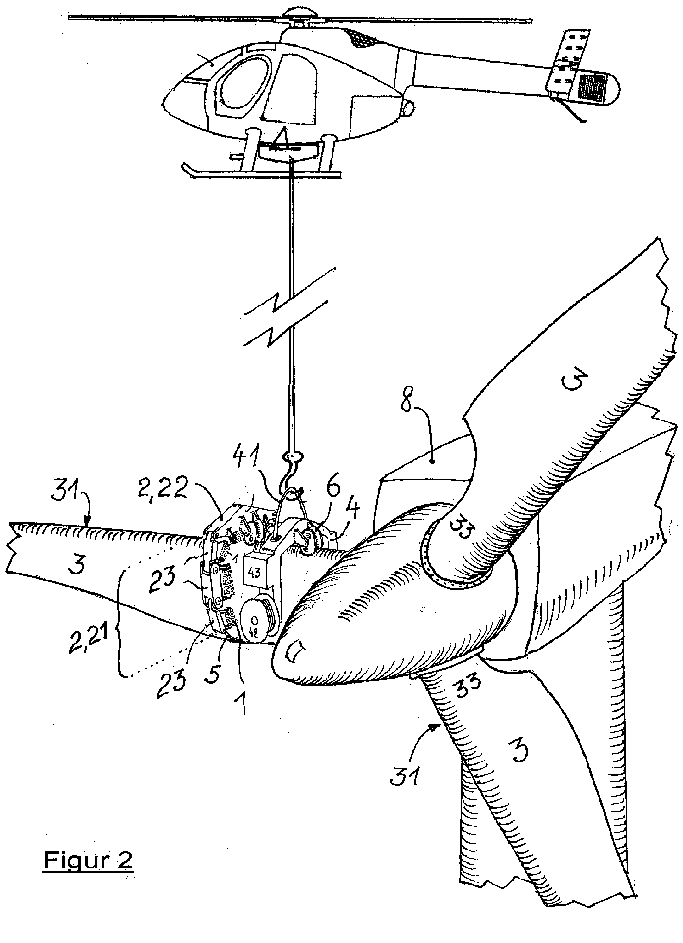

Dieser Vorgang findet jedoch in der Regel nicht von der dargestellten Position aus statt. In Figur 2 ist nachvollziehbar, wie dieser Vorgang abläuft: Der Träger 2 fährt vor dem Abheben wieder zurück zur Versorgungseinheit 4 in der Nähe der Wurzel 33. Dabei wird die flexible Leitung 5, die den Träger 2 mit der Versorgungseinheit 4 verbindet, auf den Wickel 42 an der Versorgungseinheit 4 aufgewickelt.

Die Zwischenträger 51, die die Leitung 5 in dem Zwischenraum zwischen dem Trägers und der Versorgungseinheit 4 tragen, werden ebenfalls mit an die Versorgungseinheit 4 herangefahren. Dann können alle Baugruppen zu einer einzigen Transporteinheit verbunden werden und gemeinsam vom Rotorblatt 3 abgehoben werden. Dazu dient die Tragöse 41 oben auf der Versorgungseinheit 4. Darin kann der Haken eines Helikopters oder eines Krans einhaken und die gesamte Transporteinheit abheben.

Die in Figur 1 dargestellte Position des Trägers 2 zeigt ihn nahe dem Ende des Rotorblattes 3. In dieser Position hat er bereits den größeren Teil des Rotorblattes zwischen der Versorgungseinheit 4 und seiner jetzigen Position gereinigt und muss nur noch den kleineren Teil des Rotorblattes bis zu dessen Spitze säubern. Dazu werden die Schenkelglieder 23 aus der hier gezeigten "Abhebestellung" näher an die Oberfläche des Rotorblattes 3 herangeschwenkt. Dann liegen die Reinigungsgeräte 1 auf der Oberfläche des Rotorblattes auf und können sie mechanisch reinigen.

In Figur 1 sind die Antriebe für das Verschwenken der Schwenkglieder 23 der Übersichtlichkeit halber nicht eingezeichnet. Ebenso nicht eingezeichnet sind Düsen für das Versprühen von Reinigungsflüssigkeit, die von den Reinigungsgeräten auf der Rotoroberfläche verarbeitet werden. Weiterhin nicht dargestellt ist der motorische Antrieb für wenigstens ein Rad 6, um den Träger 2 auf der Blattvorderkante 31 entlang zu bewegen.

An der Versorgungseinheit 4 ist in Figur 1 nur schematisch ein Behälter 43 eingezeichnet. Er kann z.B. Reinigungsflüssigkeit oder eine elektronische Steuerung oder einen Energieerzeuger oder eine andere Funktionsbaugruppe beherbergen.

Eine weitere, optionale zusätzliche Baugruppe der Versorgungseinheit 4 ist der Aufwickler 42 für die Leitung 5.

In Figur 1 ist sehr gut zu erkennen, dass sowohl beim Träger 2 als auch bei der Versorgungsbaugruppe 4 die Anbauten an deren nach unten weisenden Schenkeln so gewichtig sind, dass der Schwerpunkt sowohl des Trägers 2 als auch der Versorgungseinheit 4 unterhalb der Blattvorderkante 31 zu liegen kommt, sodass beide Baugruppen eine stabile und kippsichere Position einnehmen.

In Figur 1 ist ebenfalls zu sehen, dass Inspektionsgeräte an das erfindungsgemäße Reinigungsgerät angebaut werden können. Sie sind in den gezeigten Ausführungsvarianten als quaderförmige Baugruppen an die drei Stück dargestellten Schenkelglieder 23 eines Schenkels 21 angesetzt.

In Figur 1 sind sie der Übersichtlichkeit halber zueinander beabstandet. In der Praxis ist es denkbar, dass die Inspektionsgeräte nur einen sehr geringen Abstand zueinander haben, oder dass sie in vertikaler Richtung etwas bewegt werden können um die gesamte Oberfläche des Rotors lückenlos erfassen zu können.

Die symbolisch dargestellten Gehäuse beinhalten eine beliebige Art von Inspektionsgeräten. Neben Kameras sind taktile Sensoren, also mechanisch berührende Elemente ebenso denkbar, wie kapazitive oder induktive Abtastungen, die Messung der Reflektion von Lichtstrahlen, Ultraschall oder Wassertröpfchen. Ein anderes, denkbares Verfahren sind Prüfhämmer, die mit einer definierten Geschwindigkeit auf die Oberfläche treffen und dort dank reproduzierbarem Aufprallwinkel und reproduzierbarer Aufprallgeschwindigkeit ein reproduzierbares Geräusch erzeugen. Wenn dessen "Echo" von einem für diesen Flügel gespeicherten Geräuschmuster abweicht, so ist das ein Hinweis auf eine beginnende Verformung.

In **Figur 2** ist ein Ausschnitt eines Windrades mit einem Reinigungsgerät gezeigt, von dem in Figur 1 nur ein Rotorblatt wiedergegeben ist. Figur 2 zeigt die Gondel 8 eines Windrades, die drei Rotorblätter 3 trägt, von denen das linke horizontal ausgerichtet ist. Im dargestellten Zustand sind soeben von einem Hubschrauber eine Versorgungseinheit 4 zusammen mit einem Träger 2 an einem Seil auf die Blattvorderkante 31 des horizontal stehenden Rotorblattes 3 abgesetzt worden.

In Figur 2 ist gut zu erkennen, wie ein Kranhaken an einem Tragseil des Hubschraubers in die Tragöse 41 der Versorgungseinheit 4 eingreift.

Über sein Trägermittelstück 22 ist der Träger 2 in diesem Zustand mit der Versorgungseinheit 4 mechanisch verbunden. Der Übersichtlichkeit halber ist in Figur 2 die mechanische Verbindung jedoch nicht detailliert eingezeichnet.

In Figur 2 wird ebenso deutlich, dass zum Abschluss der Reinigungsphase die Versorgungseinheit 4 und der Träger 2 wiederum ganz nahe beieinander stehen und in geeigneter Weise wieder so miteinander verbunden werden, dass der Hubschrauber sie als eine gemeinsame Baugruppe von dem horizontal ausgerichteten Rotorblatt abnehmen und weiter versetzen kann.

Im Vergleich von Figur 2 und Figur 1 wird gut nachvollziehbar, dass in einer Betriebsvariante die Versorgungseinheit 4 im Bereich der Wurzel 33 des Rotorblattes 3 verbleiben kann. Der Träger 2 weiterbewegt sich dann mit Hilfe der Räder 6 an seinem Trägermittelstück 22 auf der Blattvorderkante 31 des horizontal ausgerichteten Rotorblattes 3 weiter und entfernt sich von der Versorgungseinheit 4.

In Figur 2 ist zu erkennen, dass er dabei über die Leitung 5 stets mit der Versorgungseinheit 4 verbunden ist. Die Leitung 5 wird mit zunehmender Entfernung des Trägers 2 von der Versorgungseinheit 4 von dem Wickel 42 abgewickelt und bei der Rückfahrt wieder aufgewickelt.

In Figur 2 wird ebenfalls deutlich, dass sich auch die Versorgungseinheit 4 nach dem Absetzen durch den Hubschrauber ebenfalls auf ihren Rädern 6 selbsttätig weiterbewegen kann und gegebenenfalls noch näher an die Wurzel 33 des Rotorblattes 3 heranfahren kann.

In den meisten Fällen wird es den Anflug des Hubschraubers erleichtern, wenn der Block aus Versorgungseinheit 4 und Träger 2 in einem größeren Abstand von der Gondel 8 aufgesetzt wird. Dann fahren Versorgungseinheit 4 und Träger 2 gemeinsam möglichst nahe an die Wurzel 33 des Rotorblattes heran. Alternativ können sie sich auch schon am Absetzpunkt trennen. Derweil der Träger 2 die Arbeit mit den Reinigungsgeräten 1 beginnt, kann die Versorgungseinheit 4 an die Wurzel 33 heranfahren, sodass sie die noch zu reinigende Fläche des Rotorblattes 3 für den "Rückweg" des Trägers 2 frei macht.

### Bezugszeichenliste

- 1: Reinigungsgerät, an Schenkel 21 angeordnet
- 2: Träger
- 21: Schenkel des Trägers 2, tragen Reinigungsgeräte 1
- 22: Trägermittelstück des Trägers 2
- 23: Schenkelglied eines Schenkels 21
- 3: Rotorblatt
- 31: Blattvorderkante eines Rotorblattes 3
- 32: Längsachse eines Rotorblattes 3
- 33: Wurzel des Rotorblattes 3
- 4: Versorgungseinheit
- 41: Tragöse an Versorgungseinheit 4
- 42: Wickel für Leitung 5
- 43: Behälter an Versorgungseinheit 4
- 5: Leitung, verbindet den Träger 2 mit der Versorgungseinheit 4
- 51: Zwischenträger für Leitung 5, auf Blattvorderkante 31 verfahrbar
- 6: Räder an Trägermittelstück 22 und an Versorgungseinheit 4
- 7: Inspektionsgerät, an Schenkel 21, zur Inspektion des Rotorblattes 3
- 8: Gondel, trägt Rotorblätter 3

## Patentansprüche

1. Rotorblattreiniger für ein Rotorblatt einer Windkraftanlage umfassend einen Träger (2), der auf der Blattvorderkante (31) des Rotorblatts (3) aufsetzbar ist, wobei der Träger (2)
- zur Spitze des Profils des Rotorblatts (3) weisend und
- auf den beiden einander gegenüber liegenden Seiten des Rotorblattes (3) anordbar ist, und
- mittels einer Fördereinrichtung entlang der Blattvorderkante (31) beweglich und verfahrbar ist und an dem ein oder mehr Reinigungsgeräte (1) für Oberflächen befestigt ist,
und wobei
- die Längsachse (32) des Rotorblattes (3) etwa waagerecht ausgerichtet werden kann und
- das Profil des Rotorblattes (3) eine etwa senkrechte Stellung einnehmen kann,
- der Träger (2) U-förmig ist, wobei zwei Schenkel (21) des Us derart ausgebildet sind, dass sie mit ihren freien Enden zur Spitze des Profils des Rotorblattes (3) weisend und auf den beiden einander gegenüber liegenden Seiten des Rotorblattes (3) anordbar sind und jeder der beiden Schenkel (21) wenigstens je ein Reinigungsgerät (1) trägt, **dadurch gekennzeichnet, dass**
- der Rotorblattreiniger aus zwei Baugruppen besteht, von denen die eine der Träger (2) und die andere eine Versorgungseinheit (4) ist, die derart ausgebildet ist, dass der Träger (2) mit Energie, wie z.B. elektrischem Strom oder Druckluft und/oder Reinigungsmittel versorgbar ist,
- wobei die Versorgungseinheit (4) ebenfalls U-förmig und auf die Blattvorderkante (31) aufsetzbar und über flexible Leitungen (5) mit dem Träger (2) verbunden ist.

2. Rotorblattreiniger nach Anspruch 1, **dadurch gekennzeichnet, dass** die Reinigungsgeräte (1) rotierbare Bürsten sind.

3. Rotorblattreiniger nach Anspruch 1 oder 2, **dadurch gekennzeichnet, dass** an freien, nach unten weisenden Enden der Schenkel (21) Hilfseinrichtungen oder Gewichte angebracht sind, so dass sich der Schwerpunkt des Trägers (2) und aller seiner Anbauten unterhalb der Blattvorderkante (31) befindet.

4. Rotorblattreiniger nach einem der vorhergehenden Ansprüche, **dadurch gekennzeichnet, dass** die Schenkel (21) des Trägers (2) durch ein Trägermittelstück (22) miteinander verbunden sind, an dem ein weiteres Reinigungsgerät (1) angeordnet ist.

5. Rotorblattreiniger nach Anspruch 4, **dadurch gekennzeichnet, dass** an der Unterseite des Trägermittelstücks (22) als Teil der Fördereinrichtung wenigstens eine Rolle oder ein Rad (6) angeordnet ist.

6. Rotorblattreiniger nach Ansprüche 4 oder 5, **dadurch gekennzeichnet, dass** an der Unterseite des Trägermittelstücks (22) und/oder eines Mittelstückes einer Versorgungseinheit (4) wenigstens zwei Rollen oder Räder (6) angeordnet sind,
- die in der Längsachse (32) zueinander beabstandet sind und
- deren Lauffläche im Querschnitt konkav geformt ist und
- die damit auf der Blattvorderkante (31) abrollen.

7. Rotorblattreiniger nach Ansprüche 5 oder 6, **dadurch gekennzeichnet, dass** wenigstens eines der Räder (6) durch einen Antrieb drehbar ist.

8. Rotorblattreiniger nach einem der vorhergehenden Ansprüche, **dadurch gekennzeichnet, dass** die Versorgungseinheit (4) auf dem Rotorblatt (3) bis in die Nähe seiner Wurzel 33 verfahrbar ist und diese Bewegung beim Aufsetzen aus der Ferne steuerbar ist.

9. Rotorblattreiniger nach Anspruch 8, **dadurch gekennzeichnet, dass** die Leitungen (5) an wenigstens einem U-förmigen Zwischenträger (51) angehängt sind, der zwischen dem Träger (2) und der Versorgungseinheit (4) auf der Blattvorderkante (31) verfahrbar ist.

10. Rotorblattreiniger nach einem der vorhergehenden Ansprüche, **dadurch gekennzeichnet, dass** er mit der Versorgungseinheit (4) und allen Zwischenträgern (51) und allen Leitungen (5) zu einer Transporteinheit verkuppelbar ist, die über eine zentrale Aufnahmevorrichtung wie z.B. eine Tragöse (41),
- von einem Hubschrauber oder
- von einem Kran an der Gondel 8 der Windkraftanlage oder
- durch einen Kran vom Boden aus
aufgenommen und auf ein anderes Rotorblatt (3) oder in einen Transporter gesetzt werden kann.

11. Rotorblattreiniger nach einem der vorhergehenden Ansprüche, **dadurch gekennzeichnet, dass** als Teil der Fördereinrichtung wenigstens ein Seil angeordnet ist, das derart ausgebildet ist, dass es aus dem Bereich des Rotormittelpunktes etwa parallel zum Rotorblatt (3) verlaufen kann und den Träger (2) bewegen kann.

12. Rotorblattreiniger nach Anspruch 11, **dadurch gekennzeichnet, dass** er derart ausgebildet ist, dass bei einem reinigenden Rotorblatt (3) in senkrechter Ausrichtung das Seil zum Fördern des Trägers (2) durch dessen Gewicht gestrafft wird.

13. Rotorblattreiniger nach einem der vorhergehenden Ansprüche, **dadurch gekennzeichnet, dass** die Reinigungsgeräte (1)
∘ rotierende Bürsten oder Rollen oder Walzen, und/oder
∘ Hochdruckreiniger oder andere Sprüheinrichtungen für Reinigungsflüssigkeit, und/oder
∘ Ultraschallquellen und/oder
∘ Trockeneisdüsen und/oder
∘ Laserstrahlen sind.

14. Rotorblattreiniger nach Anspruch 13, **dadurch gekennzeichnet, dass** an wenigstens einem Schenkel (21) wenigstens zwei rotierende Bürsten oder Walzen oder Rollen angeordnet sind,
- die sich in ihrer Wirkung teilweise überlappen und
- deren Abstand zueinander veränderbar ist.

15. Rotorblattreiniger nach einem der vorhergehenden Ansprüche, **dadurch gekennzeichnet, dass**
- die Reinigungsgeräte (1) beweglich an den Schenkeln (21) befestigt
sind, z.B. durch gelenkig an den Schenkeln (21) befestigte Schleppstangen, und
- zum Betrieb auf die Oberfläche des Rotorblattes (3) drückbar sind,
z.B. mittels Pneumatikzylindern.

16. Rotorblattreiniger nach einem der vorhergehenden Ansprüche, **dadurch gekennzeichnet, dass**
die Schenkel (21) aus mehreren, gelenkig miteinander verbundenen Schenkelgliedern 23 bestehen, wobei
- an jedem Schenkelglied 23 ein Reinigungsgerät (1) befestigt ist und
- die Schenkelglieder (23) parallel zur Längsachse (32) des Rotorblattes (3) gegeneinander verschwenkbar sind und
- das oberste Schenkelglied (23) gegenüber dem Trägermittelstück (22)
des Trägers auf die Rotoroberfläche drückbar ist und
- jedes weitere Schenkelglied (23) gegenüber seinem benachbarten,
höheren Schenkelglied auf die Rotoroberfläche drückbar ist.

17. Rotorblattreiniger nach den vorhergehenden Ansprüchen 4 - 6 oder 16, **dadurch gekennzeichnet, dass** das Trägermittelstück (22) auch bei verschränkten Profilen des Rotorblattes (3), bei denen deshalb nicht jeder Profilabschnitt gleichzeitig in eine genau senkrechte Position verschwenkt werden kann, an jedem Punkt des Rotorblattes (3) in einer etwa horizontalen Position gehalten wird, indem der Schwenkwinkel der Schleppstangen oder das jeweils oberste Schenkelglied (23) auf beiden Seiten des Rotorblattes (3) entsprechend angesteuert wird.

18. Rotorblattreiniger nach einem der vorhergehenden Ansprüche, **dadurch gekennzeichnet, dass** an den Schenkeln (21) Inspektionsgeräte 7 zur Diagnose von Rissen und anderen Beschädigungen des Rotors angebracht sind, die mit
- akustischen Signalen und /oder
- Infrarotlicht und/oder
- bildaufnehmenden und bildspeichernden Kameras arbeiten.

19. Rotorblattreiniger nach einem der vorhergehenden Ansprüche, **dadurch gekennzeichnet, dass** am Träger (2)
- Geräte zum Abtragen von alten, vorhandenen Beschichtungen wie
z.B. Sandstrahler und/oder
- Geräte zum Auftragen von neuen Beschichtungen, wie z.B. Farbsprühlanzen anbringbar sind.

20. Rotorblattreiniger nach einem der vorhergehenden Ansprüche, **dadurch gekennzeichnet, dass** an die Versorgungseinheit (4) und/ oder an den Träger (2)
- eine Arbeitsplattform für eine Bedienperson angebaut ist,
- von wo aus der Reinigungsvorgang gesteuert und überwacht werden kann.

21. Rotorblattreiniger nach einem der vorhergehenden Ansprüche, **dadurch gekennzeichnet, dass** er mit einer drahtlosen Fernbedienung steuerbar ist.

22. Rotorblattreiniger nach Anspruch 13, **dadurch gekennzeichnet, dass**
unterhalb jedes Schenkels (21) je ein Auffangbehälter für Reinigungsflüssigkeit angeordnet ist.

23. Rotorblattreiniger nach Anspruch 13, **dadurch gekennzeichnet, dass** die Reinigungsflüssigkeit
- in einen Sammelbehälter oder
- in eine Wiederaufbereitungseinrichtung
gepumpt werden kann.

24. Rotorblattreiniger nach einem der vorhergehenden Ansprüche, **dadurch gekennzeichnet, dass** auf dem Träger (2) Sensoren zur Erfassung
- des Endes vom Rotorblatt (3) in Richtung seiner Längsachse 32 und/oder
- der Hinterkante des Profils vom Rotorblatt (3) und/oder
- des Abstandes eines Reinigungsgerätes (1) von der Rotoroberfläche
und/oder
- der Windstärke und der Windrichtung und/oder
- des jeweiligen Verschmutzungsgrades und/oder
- der Abweichung des Trägermittelstückes (22) von der Horizontalen
und/oder
- von Markierungen auf der Rotoroberfläche vorhanden sind und wenigsten eine Steuerung die Information der Sensoren auswertet und die damit zu verknüpfenden Aktoren ansteuert.

25. Rotorblattreiniger nach einem der vorhergehenden Ansprüche, **dadurch gekennzeichnet, dass**
- ein Verbrennungsmotor und/oder
- eine Batterie und/oder
- ein Generator und/oder
- ein Kompressor für Pneumatik und/oder
- ein Druckerzeuger für ein Hydrauliksystem und/oder
- eine Hochdruckpumpe für Reinigungsflüssigkeiten und/oder
- ein Behälter für Reinigungsflüssigkeiten und/oder
- ein Vorratsbehälter für Trockeneis und/oder
- eine elektronische Steuerung und/oder
- eine Telemetrieeinrichtung zur Datenübermittlung auf dem Träger (2) und/oder der Versorgungseinheit (4) vorhanden sind.

26. Rotorblattreiniger nach Anspruch 13, **dadurch gekennzeichnet, dass**
- die Energie und/oder
- die Reinigungsflüssigkeit von der Gondel 8 der Windkraftanlage her zuführbar und/oder
- belastete Reinigungsflüssigkeit zur Gondel 8 zurückführbar ist.

27. Verwendung eines Rotorblattreinigers nach einem der Ansprüche 1-26 umfassend einen Träger (2), der auf der Blattvorderkante (31) des Rotorblatts (3) aufsetzbar ist, wobei der Träger (2)
- zur Spitze des Profils des Rotorblatts (3) weist und
- auf den beiden einander gegenüber liegenden Seiten des Rotorblattes (3) angeordnet ist und
- mittels einer Fördereinrichtung entlang der Blattvorderkante (31) beweglich ist und an dem ein oder mehr Reinigungsgeräte (1) für Oberflächen befestigt ist,
- wobei der Träger (2)
∘ entlang der Blattvorderkante (31) verfahrbar, und
∘ U-förmig ist, wobei zwei Schenkel (21) des Us mit ihren freien Enden zur Spitze des Profils des Rotorblattes (3) weisen und auf den beiden einander gegenüber liegenden Seiten des Rotorblattes (3) angeordnet sind und jeder der beiden Schenkel (21) wenigstens je ein Reinigungsgerät (1) trägt,
zum Reinigen eines Rotorblatts einer Windkraftanlage, wobei der Rotorblattreiniger
- in einem ersten Schritt das Rotorblatt (3) in eine waagerechte Stellung in Bezug auf seine Längsachse (32) und in eine etwa senkrechte Stellung in Bezug auf sein Profile verschwenkt wird, und
- in einem zweiten Schritt der Rotorblattreiniger auf die Blattvorderkante (31) des Rotorblatts (3) aufgesetzt wird und von einem Gerät gelöst wird, mit dem er aufgesetzt worden ist,
- in einem dritten Schritt so nahe wie möglich an eine Wurzel des Rotorblattes (3) verfahren wird, und
- in einem vierten Schritt entlang einer Blattvorderkante (31) bis zu einem äußeren Ende des Rotorblattes (3) verfahren wird und dabei eine Rotorblattoberfläche reinigt, und
- in einem fünften Schritt wieder zur Wurzel des Rotorblattes (3) zurück fährt, und
- in einem sechsten Schritt vom Rotorblatt (3) abgehoben wird.

28. Verwendung eines Rotorblattreinigers gemäß Anspruch 27, **dadurch gekennzeichnet, dass**
- im vierten und im fünften Schritt nur der Träger (2) bis zum Ende des Rotorblattes (3) verfährt und wieder zurück kehrt und die Versorgungseinheit (4) in der Nähe der Wurzel des Rotorblattes (3) verbleibt und
- im fünften Schritt der Träger (2) mit der Versorgungseinheit (4) zu einer Transporteinheit verkuppelt wird und
- im sechsten Schritt die gesamte Transporteinheit in einem Zug abgehoben wird.

29. Verwendung eines Rotorblattreinigers nach Anspruch 27, **dadurch gekennzeichnet, dass** er im zweiten Schritt
- von einem Hubschrauber oder
- von einem Kran an der Gondel 8 der Windkraftanlage oder
- von einem Kran am Boden
auf die Blattvorderkante aufgesetzt wird.

30. Verwendung eines Rotorblattreinigers nach Anspruch 27, **dadurch gekennzeichnet, dass**
im vierten Schritt
- die Reinigungsflüssigkeit aus dem Auffangbehälter aufbereitet wird
und
- sofort wieder zur Reinigung eingesetzt wird.

31. Verwendung eines Rotorblattreinigers nach Anspruch 27,
**dadurch gekennzeichnet, dass**
im zweiten Schritt aus einem waagerecht stehenden Rotorblatt (3) der Windkraftanlage ein Hubseil herabgelassen werden kann, mit dem der auf dem Boden stehende Rotorblattreiniger in die Nähe dieses Rotorblattes (3) gehoben werden kann und dann der gesamte Rotor der Windkraftanlage soweit verschwenkt wird, bis das nächste Rotorblatt (3) der Windkraftanlage von unten her in die Öffnung zwischen den Schenkeln des Trägers (2) einschwenkt und den Rotorblattreiniger berührt und dann während des weiteren Verschwenkens des Rotorblattes (3) bis zu dessen waagerechter Stellung das Hubseil soweit aus dem höher stehenden Rotorblatt (3) wieder herausgelassen wird, bis der Rotorblattreiniger sicher auf dem nunmehr waagerecht stehenden Rotorblatt (3) ruht.

32. Verwendung eines Rotorblattreinigers nach einem der Ansprüche 27 - 31, **dadurch gekennzeichnet, dass**
- im ersten Schritt ein Rotorblatt (3) einer Windkraftanlage in eine etwa
senkrechte Stellung in Bezug auf seine Längsachse (32) verschwenkt wird und
- im zweiten Schritt der Träger (2) mit einer Fördereinrichtung, wie z.B.
einem Seil an die Blattvorderkante (31) angesetzt wird und
- im dritten Schritt der Träger (2) mittels der Fördereinrichtung von der
Wurzel bis zum äußeren Ende des Rotorblattes (3) verfahren wird
und dabei die Rotoroberfläche reinigt und
- im vierten Schritt vom Rotorblatt (3) abgehoben wird oder das Rotorblatt (3) aus dem Träger (2) heraus geschwenkt wird und der Rotorblattreiniger aus dem Flugkreis der Rotorblätter (3) heraus bewegt
wird und
dann die Reinigung weiterer Rotorblätter wiederum nach den Schritten 1 bis 4 abläuft.

## Claims

1. Rotor blade cleaner for a rotor blade of a wind turbine comprising a carrier (2) that is placeable onto the leading edge (31) of the rotor blade (3), wherein the carrier (2) is
- arrangeable on two opposite sides of the rotor blade (3)
- pointing towards the tip of the profile of the rotor blade (3), and
- movable and displaceable along the leading edge (31) by means of a conveyor mechanism and to which one or more cleaning devices (1) for surfaces are attached,
and wherein
- the longitudinal axis (32) of the rotor blade (3) can be oriented approximately horizontally and
- the profile of the rotor blade (3) can attain an approximately vertical attitude,
- the carrier (2) is U-shaped, wherein two limbs (21) of the U are formed such that with their free ends they are pointing towards the tip of the profile of the rotor blade (3) and are arrangeable on the two opposite sides of the rotor blade (3) and each of the two limbs (21) is carrying at least one cleaning device (1),
**characterized in that**
- the rotor blade cleaner consists of two units, of which one is the carrier (2) and the other is a supply unit (4) that is constructed such that the carrier (2) is suppliable with energy, like, e.g., electric current or compressed air, and/or cleaning agent,
- wherein the supply unit (4) is also U-shaped and placeable onto the leading edge (31) and is connected to the carrier (2) via flexible lines (5).

2. Rotor blade cleaner according to claim 1, **characterized in that** the cleaning devices (1) are rotatable brushes.

3. Rotor blade cleaner according to claim 1 or 2, **characterized in that** at free, downward pointing ends of the limbs (21) auxiliary furnishings or weights are attached, such that the center of gravity of the carrier and all of its attachments is located below the leading edge (31).

4. Rotor blade cleaner according to one of the preceding claims, **characterized in that** the limbs (21) of the carrier (2) are connected to each other by a carrier centerpiece (22), on which a further cleaning device (1) is arranged.

5. Rotor blade cleaner according to claim 4, **characterized in that** on the underside of the carrier centerpiece (22) as part of the conveyer mechanism at least one roller or wheel (6) is arranged.

6. Rotor blade cleaner according to claim 4 or 5, **characterized in that** on the underside of the carrier centerpiece (22) and/or a centerpiece of a supply unit (4) at least two rollers or wheels (6) are arranged
- which are spaced apart in the longitudinal axis (32) and
- of which the tread is formed concave in cross section, and
- which therewith travel on the leading edge (31).

7. Rotor blade cleaner according to claim 5 or 6, **characterized in that** at least one of the wheels (6) is turnable by a drive.

8. Rotor blade cleaner according to one of the preceding claims, **characterized in that** the supply unit (4) is movable on the rotor blade (3) into the vicinity of its root (33) and **in that** this movement is remotely controllable during placement.

9. Rotor blade cleaner according to claim 8, **characterized in that** the lines (5) are suspended from at least one U-shaped intermediate carrier (51) that is movable between the carrier (2) and the supply unit (4) on the leading edge (31).

10. Rotor blade cleaner according to one of the preceding claims, **characterized in that** it is coupleable with the supply unit (4) and all intermediate carriers (51) and all lines (5) into a transport unit that can be lifted via a central lifting device, like, e.g., a lifting eye (41), by
- a helicopter or
- a crane on the nacelle (8) of the wind turbine or
- a crane on the ground
and placed onto another rotor blade (3) or into a transporter.

11. Rotor blade cleaner according to one of the preceding claims, **characterized in that** as part of the conveyor mechanism at least one rope is arranged, that is formed such that it may lead from the area of the hub of rotor approximately parallel to the rotor blade (3) and that can move the carrier (2).

12. Rotor blade cleaner according to claim 11, **characterized in that** it is designed such that for a rotor blade (3) to be cleaned in vertical orientation the rope for conveying the carrier (2) is tightened by the weight of the carrier (2).

13. Rotor blade cleaner according to one of the preceding claims, **characterized in that** the cleaning devices (1) are
∘ rotating brushes or rollers or cylinder rollers, and/or
∘ high-pressure cleaners or other sprayers for cleaning liquid, and/or
∘ ultra sound sources, and/or
∘ dry ice nozzles, and/or
∘ laser beams.

14. Rotor blade cleaner according to claim 13, **characterized in that** on at least one limb (21) at least two rotating brushes or cylinder rollers are arranged,
- that partially overlap in their effect and
- the spacing of which is variable.

15. Rotor blade cleaner according to one of the preceding claims, **characterized in that**
- the cleaning devices (1) are movably fastened to the limbs (21), e.g. through tow bars pin-jointed to the limbs (21), and
- during the operation are pressable against the surface of the rotor blade (3), e.g. by means of pneumatic cylinders.

16. Rotor blade cleaner according to one of the preceding claims, **characterized in that**
the limbs (21) consist of several, articulated limb members (23), wherein
- to each limb member (23) a cleaning device (1) is attached, and
- the limb members (23) are rotatable relative to one another parallel to the longitudinal axis (32) of the rotor blade (3), and
- the uppermost limb member (23) is pressable onto the rotor surface relative to the carrier centerpiece (22), and
- each further limb member (23) is pressable against the rotor surface relative to its neighbouring higher limb member.

17. Rotor blade cleaner according to the preceding claims 4 - 6 or 16, **characterized in that** the carrier centerpiece (22) is held in an approximately horizontal position even for twisted profiles of the rotor blades, where consequently not every profile section may be pivoted into an exactly vertical position, by controlling the pivot angle of the tow bars or the in each case uppermost limb member (23) accordingly.

18. Rotor blade cleaner according to one of the preceding claims, **characterized in that** on the limbs (21) inspection devices (7) for the diagnosis of cracks and other damage of the rotor are attached that work with
- acoustic signals, and/or
- infrared light, and/or
- image capturing and image storing cameras.

19. Rotor blade cleaner according to one of the preceding claims, **characterized in that** on the carrier (2)
- devices for removing old, present coatings like, e.g., sand blasting devices, and/or
- devices for applying new coatings, like, e.g., paint spray lances are attacheable.

20. Rotor blade cleaner according to one of the preceding claims, **characterized in that** to the supply unit (4) and/or the carrier (2)
- a working platform for an operator is fitted,
- from which the cleaning process may be monitored and controlled.

21. Rotor blade cleaner according to one of the preceding claims, **characterized in that** on it is controllable with a wireless remote control.

22. Rotor blade cleaner according to claim 13, **characterized in that** below each limb (21) a vessel for capturing cleaning liquid is arranged.

23. Rotor blade cleaner according to claim 13, **characterized in that** the cleaning liquid may be pumped into
- a collection vessel or
- a recycling unit.

24. Rotor blade cleaner according to one of the preceding claims, **characterized in that** on the carrier (2) sensors for sensing
- the end of the rotor blade (3) in the direction of its longitudinal axis (32) and/or
- the trailing edge of the profile of the rotor blade (3) and/or
- the distance of a cleaning device (1) from the rotor surface and/or
- the strength and the direction of the wind, and/or
- the degree of contamination in each case, and/or
- the deviation of the carrier centerpiece (22) from the horizontal and/or
- of markings on the rotor surface
are present and at least a controller is evaluating the information of the sensors and controlling the actuators to be linked therewith.

25. Rotor blade cleaner according to one of the preceding claims, **characterized in that**
- a combustion motor, and/or
- a battery, and/or
- a generator, and/or
- a compressor for pneumatics, and/or
- a pressure generator for a hydraulic system and/or
- a high pressure pump for cleaning liquids and/or
- a container for cleaning liquids, and/or
- a storage container for dry ice, and/or
- an electronic controller and/or
- a telemetry device for data transmission is present on the carrier (2) and/or the supply unit (4).

26. Rotor blade cleaner according to claim 13, **characterized in that**
- the energy and/or
- the cleaning liquid is supplyable from the nacelle (8) of the wind turbine and/or
- contaminated cleaning liquid is returnable to the nacelle (8).

27. Use of a rotor blade cleaner according to one of the claims 1 - 26 comprising a carrier (2) that is placeable onto the leading edge (31) of the rotor blade (3), wherein the carrier (2)
- points towards the tip of the profile of the rotor blade (3) and
- is arranged on the two opposing sides of the rotor blade (3) and
- is movable along the leading edge (31) by means of a conveyor mechanism and to which one or more cleaning devices for surfaces are attached,
- wherein the carrier (2) is
∘ displaceble along the leading edge (31), and
∘ U-shaped, wherein two limbs (21) of the U point with their free ends towards the tip of the profile of the rotor blade (3) and and are arranged on the two opposing sides of the rotor blade (3) and each of the limbs (21) is carrying at least one cleaning device (1),
for cleaning a rotor blade of a wind turbine, wherein the rotor blade cleaner
- in a first step the rotor blade (3) is pivoted into an approximately horizontal attitude in relation to its longitudinal axis (32) and an approximately vertical attitude in relation to its profile, and
- in a second step the rotor blade cleaner is placed onto the leading edge (31) of the rotor blade (3) and detached from the apparatus with which it was placed, and
- in a third step is displaced as close as possible towards the root of the rotor blade (3), and
- in a fourth step is moved along the the leading edge (31) to the furthest end of the rotor blade (3) whilst cleaning a rotor blade surface, and
- in a fifth step is returned to the root of the rotor blade (3),
and
- in a sixth step is lifted off the rotor blade (3).

28. Use of a rotor blade cleaner according to claim 27, **characterized in that**
- in the fourth and fifth step only the carrier (2) moves to the end of the rotor blade (3) and returns and the supply unit (4) remains in the vicinity of the root of the rotor blade (3) and
- in the fifth step the carrier (2) is coupled together with the supply unit (4) into a transport unit and
- in the sixth step the entire transport unit is lifted off at once.

29. Use of a rotor blade cleaner according to claim 27, **characterized in that** in the second step it is placed onto the leading edge (31) by
- a helicopter, or
- a crane on the nacelle (8) of the wind turbine, or
- a crane on the ground.

30. Use of a rotor blade cleaner according to claim 27, **characterized in that** in the fourth step
- the cleaning liquid from the collection vessel is recycled, and
- immediately reused for cleaning.

31. Use of a rotor blade cleaner according to claim 27, **characterized in that** in the second step, a lifting rope may be lowered out of a horizontally oriented rotor blade (3) of the wind turbine, with which the rotor blade cleaner positioned on the ground may be lifted into the vicinity of this rotor blade (3), and then the entire rotor of the wind turbine is rotated until the next rotor blade of the wind turbine pivots from below into the opening between the limbs of the carrier (2) and touches the rotor blade cleaner and, in the course of the continued rotation of the rotor blade into a horizontal position the lifting rope is let out of the higher standing rotor blade (3) again until the rotor blade cleaner rests securely on the now horizontal rotor blade (3).

32. Use of a rotor blade cleaner according to one of the claims 27 - 31, **characterized in that**
- in the first step a rotor blade (3) of a wind turbine is rotated into an approximately vertical position in relation to its longitudinal axis (32) and
- in the second step the carrier (2) is placed at the leading edge (31) with a conveyor mechanism like, e.g., a rope, and
- in the third step the carrier is displaced by means of the conveyor mechanism to the furthest end of the rotor blade (3) whilst cleaning the rotor surface, and
- in the fourth step is lifted off the rotor blade (3) or the rotor blade (3) is rotated out of the carrier (2) and the rotor blade cleaner is moved out of the circle of rotation of the rotor blades (3) and then the cleaning of further rotor blades is carried out according to the steps 1 to 4.

## Revendications

1. Nettoyeur pour pale de rotor pour la pale de rotor d'une éolienne comprenant un support (2), qui peut être posé sur le bord avant de pale (31) du rotor (3), dans lequel le support (2)
- est orienté vers la pointe du profil de la pale de rotor (3) et
- peut être disposé sur les deux côtés de la pale de rotor (3) situés l'un en face de l'autre, et
- est mobile et peut être déplacé à l'aide d'un dispositif de transport le long du bord avant de pale (31), et sur lequel un ou plusieurs appareils de nettoyage (1) pour surfaces peuvent être fixés,
et dans lequel
- l'axe longitudinal (32) de la pale de rotor (3) peut être orienté à peu près à l'horizontale, et
- le profil de la pale de rotor (3) peut prendre une position à peu près verticale,
- le support (2) est en forme de U, dans lequel deux branches (21) du U sont formées de manière à pouvoir être orientées avec leurs extrémités libres vers la pointe du profil de la pale de rotor (3) et disposées sur les deux côtés de la pale de rotor (3) situés l'un en face de l'autre, et chacune des deux branches (21) porte au moins un appareil de nettoyage (1)
**caractérisée en ce que**
- le nettoyeur pour pale de rotor consiste en deux sous-ensembles, dont l'un est le support (2) et l'autre une unité d'alimentation (4), qui est formée de façon à ce que le support (2) puisse être alimenté avec de l'énergie, comme p. ex. du courant électrique ou de l'air comprimé et/ou un nettoyant,
- dans lequel l'unité d'alimentation (4) a également une forme de U et peut être posée sur le bord avant de pale (31), et est reliée au support (2) par l'intermédiaire de conduites flexibles (5).

2. Nettoyeur pour pale de rotor selon la revendication 1, **caractérisé en ce que** les appareils de nettoyage (1) sont des brosses rotatives.

3. Nettoyeur pour pale de rotor selon la revendication 1 ou 2, **caractérisé en ce que** des dispositifs auxiliaires ou des poids sont disposés sur les extrémités des branches (21) orientées vers le bas, de façon à ce que le centre de gravité des supports (2) et toutes ses pièces rapportées se trouvent en dessous du bord avant de pale (31).

4. Nettoyeur pour pale de rotor selon l'une quelconque des revendications précédentes, **caractérisé en ce que** les branches (21) du support (2) sont reliées ensemble par une pièce servant de moyen de support (22), sur laquelle un autre appareil de nettoyage (1) est disposé.

5. Nettoyeur pour pale de rotor selon la revendication 4, **caractérisé en ce que** sur la face inférieure de la pièce servant de moyen de support (22), au moins un galet ou une roue (6) est disposé en tant que partie du dispositif de transport.

6. Nettoyeur pour pale de rotor selon les revendications 4 ou 5, **caractérisé en ce que**, sur la face inférieure de la pièce servant de moyen de support (22) et/ou de la pièce intermédiaire d'une unité d'alimentation, (4) au moins deux galets ou roues (6) sont disposés,
- qui sont à une certaine distance l'un(e) de l'autre dans l'axe longitudinal (32) et
- dont la surface de roulement a une section de forme concave et
- qui roulent ainsi sur le bord avant de pale (31).

7. Nettoyeur pour pale de rotor selon les revendications 5 ou 6, **caractérisé en ce qu'**au moins une des roues (6) peut être tournée par un entraînement.

8. Nettoyeur pour pale de rotor selon l'une quelconque des revendications précédentes, **caractérisé en ce que** l'unité d'alimentation (4) peut être déplacée sur la pale de rotor (3) jusqu'à proximité de sa racine 33, et que ce mouvement peut être télécommandé lors de la dépose.

9. Nettoyeur pour pale de rotor selon la revendication 8, **caractérisé en ce que** les conduites (5) sont accrochées sur au moins un support intermédiaire en forme de U (51), qui peut être déplacé entre le support (2) et l'unité d'alimentation (4) sur le bord avant de pale (31).

10. Nettoyeur pour pale de rotor selon l'une quelconque des revendications précédentes, **caractérisé en ce qu'**il peut être accouplé avec l'unité d'alimentation (4), tous les supports intermédiaires (51) et toutes les conduites (5), à une unité de transport qui, par l'intermédiaire d'un dispositif de réception central comme p. ex. un œillet de support (41), peut être réceptionnée
- par un hélicoptère ou
- par une grue sur la gondole 8 de l'éolienne ou
- par une grue du sol et déposée sur une autre pale de rotor (3) ou dans un transporteur.

11. Nettoyeur pour pale de rotor selon l'une quelconque des revendications précédentes, **caractérisé en ce qu'**au moins un câble est disposé en tant que partie du dispositif de transport, qui est formé de manière à ce qu'il puisse, à partir de la zone du point central du rotor, suivre un parcours à peu près parallèle à la pale de rotor (3) et déplacer le support (2).

12. Nettoyeur pour pale de rotor selon la revendication 11, **caractérisé en ce qu'**il est formé de manière ce que le câble destiné à transporter le support (2) soit, lorsqu'il est à la verticale, tendu par son poids lorsqu'une pale de rotor (3) est à nettoyer.

13. Nettoyeur pour pale de rotor selon une des revendications précédentes, **caractérisé en ce que** les appareils de nettoyage (1) sont
∘ des brosses en rotation ou des galets ou des rouleaux, et/ou
∘ des nettoyeurs haute pression ou d'autres dispositifs de pulvérisation de liquides de nettoyage, et/ou
∘ des sources d'ultrasons et/ou
∘ des buses de glace carbonique et/ou
∘ des rayons laser.

14. Nettoyeur pour pale de rotor selon la revendication 13, **caractérisé en ce que** sur au moins une branche (21) sont disposés au moins deux brosses en rotation ou rouleaux ou galets,
- qui se chevauchent en partie dans leur effet et
- dont la distance des uns par rapport aux autres peut être modifiée.

15. Nettoyeur pour pale de rotor selon l'une quelconque des revendications précédentes, **caractérisé en ce que**
- les appareils de nettoyage (1) sont fixés de façon mobile sur les branches (21), p. ex. par des tiges de remorquage fixées de façon articulée sur les branches (21), et
- peuvent être pressés sur la surface de la pale de rotor (3), p. ex. à l'aide de vérins pneumatiques.

16. Nettoyeur pour pale de rotor selon l'une quelconque des revendications précédentes, **caractérisé en ce que** les branches (21) consistent en plusieurs maillons de branche 23 reliés entre eux de façon articulée, dans lequel
- un appareil de nettoyage (1) est fixé sur chaque maillon de branche 23 et
- les maillons de branche (23) peuvent être pivotés les uns par rapport aux autres parallèlement à l'axe longitudinal (32) de la pale du rotor (3) et
- le maillon de branche supérieur (23) vis-à-vis de la pièce servant de moyen de support (22) du support peut être pressé sur la surface du rotor et
- chaque maillon de branche (23) supplémentaire vis-à-vis de son maillon de branche voisin supérieur peut être pressé sur la surface du rotor.

17. Nettoyeur pour pale de rotor selon les revendications précédentes 4 - 6 ou 16, **caractérisé en ce que** la pièce servant de moyen de support (22) peut, même dans le cas de profils entrelacés de la pale de rotor (3) dans le cas desquels chaque section de profil ne peut pas être simultanément pivotée dans une position exactement verticale, être maintenue dans une position à peu près horizontale en chaque point de la pale de rotor (3) **en ce que** l'angle de pivotement des tiges de remorquage ou à chaque fois le maillon de branche (23) supérieur sur les deux côtés de la pale de rotor (3) est piloté en conséquence.

18. Nettoyeur pour pale de rotor selon l'une quelconque des revendications précédentes, **caractérisé en ce que** sur les branches (21), des appareils d'inspection 7 destinés au diagnostic de fissures et autres endommagement du rotor sont disposés, lesquels fonctionnent avec
- des signaux acoustiques et /ou
- de la lumière infrarouge et/ou
- des caméras prenant des images et enregistrant des images.

19. Nettoyeur pour pale de rotor selon l'une quelconque des revendications précédentes, **caractérisé en ce que** le support (2) peut recevoir
- des appareils destinés à enlever d'anciens revêtements présents comme p. ex. des sableuses et/ou
- des appareils destinés à appliquer des nouveaux revêtements, comme p. ex. des lances de pulvérisation de peinture.

20. Nettoyeur pour pale de rotor selon l'une quelconque des revendications précédentes, **caractérisé en ce que** sur l'unité d'alimentation (4) et/ ou sur le support (2)
- une plateforme de travail pour un opérateur est montée,
- à partir de laquelle l'opération de nettoyage peut être pilotée et surveillée.

21. Nettoyeur pour pale de rotor selon l'une quelconque des revendications précédentes, **caractérisé en ce qu'**il peut être piloté avec une télécommande sans fil.

22. Nettoyeur pour pale de rotor selon la revendication 13, **caractérisé en ce qu'**en dessous de chaque branche (21) est disposé un récipient de récupération pour liquide de nettoyage.

23. Nettoyeur pour pale de rotor selon la revendication 13, **caractérisé en ce que** le liquide de nettoyage peut être pompé
- dans un récipient de collecte ou
- dans un dispositif de retraitement.

24. Nettoyeur pour pale de rotor selon l'une quelconque des revendications précédentes, **caractérisé en ce que** sur le support (2) des capteurs destinés à saisir
- depuis l'extrémité de la pale de rotor (3) dans le sens de son axe longitudinal 32 et/ou
- du bord arrière du profil de la pale de rotor (3) et/ou
- de la distance d'un appareil de nettoyage (1) de la surface du rotor et/ou
- de la force du vent et du sens du vent et/ou
- du degré d'encrassement respectif et/ou
- de l'écart de la pièce servant de moyen de support (22) par rapport à l'horizontale et/ou
- des repères sur la surface du rotor sont présents et au moins une commande évalue l'information des capteurs et pilote ainsi les actionneurs devant être reliés.

25. Nettoyeur pour pale de rotor selon l'une quelconque des revendications précédentes, **caractérisé en ce que**
- un moteur à combustion et/ou
- une batterie et/ou
- un générateur et/ou
- un compresseur pour système pneumatique et/ou
- un générateur de pression pour un système hydraulique et/ou
- une pompe haute pression pour liquides de nettoyage et/ou
- un récipient pour liquides de nettoyage et/ou
- un réservoir de glace carbonique et/ou
- une commande électronique et/ou
- un dispositif de télémétrie pour la transmission de données sont présents sur le support (2) et/ou l'unité d'alimentation (4).

26. Nettoyeur pour pale de rotor selon la revendication 13, **caractérisé en ce que**
- l'énergie et/ou
- le liquide de nettoyage peut, depuis la gondole 8, alimenter l'éolienne et/ou
- le liquide de nettoyage être retourné à la gondole 8

27. Utilisation d'un nettoyeur pour pale de rotor comprenant un support (2), qui peut être posé sur le bord avant de pale (31) de la pale de rotor (3), dans lequel le support (2)
- est orienté vers la pointe du profil de la pale de rotor (3) et
- est disposé sur les deux côtés de la pale de rotor (3) situés l'un en face de l'autre et
- est mobile grâce à un dispositif de transport le long du bord avant de pale (31) et est fixé sur un ou plusieurs appareils de nettoyage (1) pour surfaces,
- dans lequel le support (2)
∘ peut être déplacé le long du bord avant de pale (31), et
∘ est en forme de U, dans lequel deux branches (21) du U sont orientées avec leurs extrémités libres vers la pointe du profil de la pale de rotor (3) et sont disposés sur les côtés de la pale de rotor (3) situés l'un en face de l'autre et chacune des deux branches (21) porte au moins un appareil de nettoyage (1),
destiné à nettoyer une pale de rotor d'une éolienne, dans lequel le nettoyeur pour pale de rotor
- dans une première étape la pale de rotor (3) est pivotée dans une position horizontale par rapport à son axe longitudinal (32) et dans une position à peu près verticale par rapport à son profil, et
- dans une deuxième étape le nettoyeur pour pale de rotor est posé sur le bord avant de pale (31) de la pale de rotor (3) et est détaché de l'appareil avec lequel il a été posé, et
- dans une troisième étape est mené aussi proche que possible sur une racine de la pale de rotor (3), et
- dans une quatrième étape est déplacé le long d'un bord avant de pale (31) jusqu'à une extrémité extérieure de la pale de rotor (3) et nettoie à cette occasion une pale de la surface du rotor, et
- dans une cinquième étape retourne à la racine de la pale de rotor (3),
et
- dans une sixième étape est soulevé de la pale de rotor (3).

28. Utilisation d'un nettoyeur pour pale de rotor selon la revendication,
**caractérisée en ce que**
- dans une quatrième et une cinquième étape seul le support (2) se déplace jusqu'à l'extrémité de la pale de rotor (3) et retourne à nouveau, et l'unité d'alimentation (4) reste à proximité de la racine de la pale de rotor (3) et
- dans une cinquième étape le support (2) est couplé à une unité de transport avec l'unité d'alimentation (4) et
- dans une sixième étape l'ensemble de l'unité de transport est soulevé en un trait.

29. Utilisation d'un nettoyeur pour pale de rotor selon la revendication 27, **caractérisée en ce que**, dans la deuxième étape, il est posé sur le bord avant de pale
- par un hélicoptère ou
- par une grue sur la gondole 8 de l'éolienne ou
- par une grue au sol.

30. Utilisation d'un nettoyeur pour pale de rotor selon la revendication 27, **caractérisée en ce que** dans la quatrième
- le liquide de nettoyage est préparé hors du récipient de récupération et
- est immédiatement utilisé pour le nettoyage.

31. Utilisation d'un nettoyeur pour pale de rotor selon la revendication 27, **caractérisée en ce que** dans la deuxième étape, un câble de levage peut être descendu de la pale de rotor (3) de l'éolienne disposée à l'horizontale, avec lequel le nettoyeur pour pale de rotor posé au sol peut être soulevé à proximité de cette pale de rotor (3) et l'ensemble du rotor de l'éolienne est pivoté jusqu'à ce que la prochaine pale de rotor (3) de l'éolienne soit pivotée depuis le bas dans l'ouverture entre les branches du support (2) et touche le nettoyeur pour pale de rotor et puis pendant la poursuite du pivotement de la pale de rotor (3) jusqu'à la position horizontale de cette dernière, le câble de levage est à nouveau descendue depuis la pale de rotor (3) située plus haut jusqu'à ce que le nettoyeur pour pale de rotor repose de façon sûre sur la pale de rotor (3) désormais placée à l'horizontale.

32. Utilisation d'un nettoyeur pour pale de rotor selon une des revendications 27 - 31, **caractérisée en ce que**
- dans une première étape une pale de rotor (3) d'une éolienne est pivotée dans une position à peu près verticale par rapport à son axe longitudinal (32) et
- dans une deuxième étape le support (2) avec un dispositif de transport, comme p. ex. un câble est posé sur le bord avant de pale (31) et
- dans une troisième étape le support (2) est déplacé à l'aide du dispositif de transport depuis la racine jusqu'à l'extrémité extérieure de la pale de rotor (3) en nettoyant la surface du rotor à cette occasion et
- dans une quatrième étape est soulevé de la pale de rotor (3) ou la pale de rotor (3) est extraite du support (2) par pivotement et le nettoyeur de pale du rotor est déplacé hors du cercle de rotation des pales de rotor (3) et le nettoyage des pales de rotor se déroule à nouveau selon les étapes 1 à 4.
